(19) Europäisches Patentamt
European Patent Office
Office européen des brevets

(11) EP 1 735 086 B1

(12) EUROPEAN PATENT SPECIFICATION

(45) Date of publication and mention
of the grant of the patent:
09.10.2019 Bulletin 2019/41

(51) Int Cl.:
B01J 8/22 (2006.01)          B01J 8/18 (2006.01)
C10G 2/00 (2006.01)

(21) Application number: 05718098.6

(22) Date of filing: 23.03.2005

(86) International application number:
PCT/GB2005/001104

(87) International publication number:
WO 2005/094979 (13.10.2005 Gazette 2005/41)

(54) **METHOD OF CONDUCTING A CHEMICAL REACTION IN A SLURRY BUBBLE COLUMN REACTOR**

VERFAHREN ZUR DURCHFÜHRUNG EINER CHEMISCHEN REAKTION IN EINEM SUSPENSIONSBLASENREAKTOR

PROCÉDÉ POUR EFFECTUER UNE RÉACTION CHIMIQUE DANS UN RÉACTEUR À COLONNE À BULLES

(84) Designated Contracting States:
AT BE BG CH CY CZ DE DK EE ES FI FR GB GR
HU IE IS IT LI LT LU MC NL PL PT RO SE SI SK TR

(30) Priority: 02.04.2004 GB 0407621

(43) Date of publication of application:
27.12.2006 Bulletin 2006/52

(73) Proprietors:
• Statoil ASA
4035 Stavanger (NO)
• PetroSA
Parow
7500 (ZA)

(72) Inventors:
• MYRSTAD, Trond
N-7048 Trondheim (NO)
• GRISLINGAS, Arne
N-7049 Trondheim (NO)
• SORAKER, Pal
N-7049 Trondheim (NO)
• LIAN, Petter
N-7058 Jakobsli (NO)
• SVENDSEN, Hallvard
N-7035 Trondheim (NO)

(74) Representative: Copsey, Timothy Graham et al
Kilburn & Strode LLP
Lacon London
84 Theobalds Road
London WC1X 8NL (GB)

(56) References cited:
EP-A- 0 679 432        GB-A- 787 123
US-A- 4 443 551        US-B1- 6 278 034

**Description**

The present invention relates to a method of conducting a chemical reaction in a three phase reactor or slurry bubble column reactor (SBCR).

SBCRs are employed to conduct many chemical reactions, particularly reactions in which the reactants are gaseous, the products include liquids, and a solid catalyst is required. In such a reaction, the gaseous reactants are introduced into a slurry of finely divided catalyst in a liquid medium which may contain a liquid reaction product. The gas introduction is achieved using a gas distributor.

A gas distributor for a slurry bubble column should satisfy some important requirements, which include:

- the gas should be distributed evenly over the entire reactor cross sectional area;
- the catalyst particles should be well dispersed;
- stagnant zones, especially at the bottom of the reaction, must be avoided;
- penetration of catalyst particles into the gas distributor during planned or unplanned reactor shutdowns must be minimised;
- erosion of reactor walls and internals should be avoided;
- the distributor should not induce unacceptable attrition of the catalyst; and
- the pressure drop should be low, for economic reasons.

The present invention was made with those objectives in mind.

There are several references teaching means for distributing and injecting synthesis gas into a slurry bubble column in Fischer-Tropsch processes. So far no reference has been identified that teaches the features of the method according to the present invention, for instance the geometric requirements pertaining to the nozzles.

Two fundamentally different solutions for the distribution of gas into a fluidised bed or a slurry reactor exist; a one-stage system and a two-stage system.

In a two-stage system, the gas first is introduced to the reactor through a injection device into a plenum chamber, and thereafter the gas is distributed through a gas distribution plate which covers the entire cross sectional are of the reactor.

In a one-stage system only one gas sparger is used, and the gas is injected into the reactor through an arrangement of feed nozzles which covers parts of the reactor cross sectional area. In reactors with internals, such as heat exchangers, a one-stage system with a pipe grid or a sparger in most cases is sufficient. Downward pointing nozzles prevent clogging of the sparger with catalyst particles if the gas flow is stopped and are more effective for redispersing the catalyst. In addition, downward gas ejection gives somewhat better bubble formation than upward ejection.

US-A-2001/0018462 discloses a gas distribution grid which includes a set of upwardly pointing gas injectors which protrude from the bottom of the reactor. The throat and cone gas injector here is clearly an example of a two-stage system.

In US-A-2853369, gas inlet nozzles are shown which can be directed downwardly towards the bottom of the reactor. Two alternative configurations of gas distribution pipes are shown.

US-A-5620670 states that a uniform distribution of synthesis gas fed uniformly to across the reactor cross section is necessary to achieve good mixing between the rising gas bubbles and the slurry medium containing the dispersed catalyst particles. The gas distributor may consist of orifices or porous metal spargers. A preferred design using orifices consists of concentric rings or torroidal manifolds nested in such a manner that the rings follow the contour of the bottom head of the reactor, with the largest diameter ring at the highest elevation and the smallest ring at the lowest elevation. The orifices can be placed facing upwards or downwards or both.

US-A-4443551 describes a distributor for delivering high velocity gas from a gas distributor through a nozzle with decreased erosion in the nozzle. Its primary use is as a distributor for oxygen-containing gas for use in the regeneration of spent catalyst used in fluid catalytic cracking processes. Lance type distributors may be used as well as nozzles pointing downwards at 30-75º. The gas distributors can have the shape of tubular rings that may be positioned at different horizontal levels.

US6278034 discloses a process for hydrogenating long chain hydrocarbons which includes continuously feeding a feedstock having long chain hydrocarbons into a slurry bed including a slurry of catalyst particles in a slurrying liquid. The slurry bed is contained in a reaction zone and the feedstock enters the reaction zone at a low level. A hydrogenation component is fed continuously into the slurry bed, at a low level. The hydrogenation component is allowed to react with the feedstock, to hydrogenate the feedstock, as the feedstock and hydrogenation component pass upwardly through the bed. Hydrogenated long chain hydrocarbons are withdrawn from the reaction zone at a high level, as a hydrogenation product. Any excess hydrogenation component is withdrawn from the reaction zone at a high level.

GB787123 discloses apparatus for carrying out gas reactions in the presence of liquid or solid catalysts which are dissolved or maintained in finely divided suspension in a liquid medium, and particularly to such apparatus for carrying out the hydrogenation of the oxides of carbon under elevated gas pressure to form hydrocarbons or organic compounds which contain oxygen. Specifically, the liquid medium is maintained stationary during the gas reaction, that is to say in which it is not subjected to any circulation or recycling inside or outside the reaction space.

According to one aspect of the invention, there is provided a method of conducting a chemical reaction in a slurry bubble column reactor as set out in claim 1.

In this way, any catalyst particles with a tendency to settle at the bottom of the reactor are dislodged and kept in motion by the gas jets and the downwards pointing nozzles prevent clogging of the gas-distributor if the flow is stopped.

Preferably, the gas supply and distribution means comprise a gas supply means and a separate gas distribution means, and these are preferably tubular. Preferably, the tubular gas supply means is connected to one or more gas supply inlets and also to a plurality of tubular gas distribution means, along which the nozzles are arranged.

To avoid differences in radial distribution of gas, the nozzle pressure drop should preferably be sufficiently large compared to the dynamic pressure in the gas distributor pipes, i.e. there must be a minimum pipe diameter in order to avoid radial maldistribution. The gas distributor pipe cross sectional area should preferably be at least twice the sum of nozzle areas in the pipe.

In a preferred embodiment, the tubular gas supply means comprises two or more tubular structures extending radially from one gas supply inlet located centrally with respect to the general geometry of the reactor, and in which the tubular gas distribution means are mounted generally perpendicular to the respective axes of the tubular structures comprising the gas supply means to which each tubular gas distribution means is connected. The distribution means may be in the shape of concentric rings or tubular toroids, or sections thereof, or in the shape of curved tubes, the centre line of each such tube lying in a respective vertical plane and may take the form of a pipe grid which is part spherical in shape.

Preferably, the dimension L is from 5 to 20 cm, more preferably 10 to 15 cm. Preferably, the diameter of the openings of the gas nozzles is equal to or greater than 5 mm, and may be less than 12 mm, preferably from 6 to 10 mm.

Preferably, the openings of the nozzles are arranged so that the principal axis of the jets of gas produced has an inclination of 45° or less to the vertical. Preferably, the distribution of nozzles with respect to a horizontal plane is such that it provides at least 75 nozzles in any arbitrarily situated circular area of 1 $m^2$.

Preferably, the bottom of the reactor used in the method has a curved or part-spherical shape and the gas distribution means generally conforms to this shape. Preferably, the openings of the nozzles lie on a virtual surface which conforms to this shape. Preferably, the openings of at least 95% of the nozzles are equidistant from the bottom of the reactor. Preferably, the openings of the nozzles are configured to direct the jet of gas perpendicularly towards the surface of the bottom of the reactor, when the reactor is in use. The nozzles may be constituted by orifices formed through the wall of the distribution means. A gas distributor pipe-grid with a hemispherical shape, is therefore preferred, located with a distance between the nozzle outlets and the bottom of the reactor close to the length of the gas jet out of the nozzles. If the distance between the nozzle outlet and the bottom of the reactor is significantly larger than the length of the gas jets out of the nozzles, a layer of catalyst particles will build up at the bottom of the reactor, since the liquid movement below the gas jets would be low. (The length of the gas jet out of each nozzle would typically be less than 20 cm.) If the distance between the nozzle outlet and the bottom of the reactor is significantly less than the length of the gas jet, erosion of the bottom of the reactor under the nozzles might be a severe problem. With a flat gas-distributor, the distance between the nozzles and the bottom of the reactor will vary. The result can be erosion problems in some parts of the bottom of the reactor, while build-up of catalyst particles can be a problem in other parts.

With a hemispherical shape of the gas distributor pipe grid, the distance between each of the nozzles and the bottom of the reactor can be constant.

With an increasing gas velocity out of the nozzles, i.e. an increasing energy content, the attrition of catalyst particles also increases. The gas velocity should therefore be as low as possible, but sufficiently high to give a nozzle pressure drop high enough to avoid axial maldistribution of gas.

Experiments have shown that below the gas jets, the liquid circulation was low. Therefore, in order to avoid stagnant zones at the bottom of the reactor, and at the same time minimise erosion at the bottom of the reactor, the distance between the nozzle outlets and the bottom of the reactor should be in the same range as the estimated jet length. If the bottom of the reactor has a hemispherical shape, the gas distributor should also have the same hemispherical shape in order to achieve the same distance between the nozzle outlets and the bottom of the reactor over the entire reactor cross sectional area.

Preferably, the gas flowing through each individual nozzle exerts a dynamic pressure of less than 15 000 kg/m $s^2$, more preferably less than 10,000 kg/ms$^2$, for example a pressure in the range 5,000 to 8,000 kg/ms$^2$. With a hemispherical pipe-grid shape, there will be differences in the hydrostatic pressure for the nozzles. To avoid differences in axial distribution of gas due to differences in hydrostatic pressure, preferably, the hydrostatic pressure difference between the highest and the lowest located nozzles in the reactor is less than 10 times the pressure drop across an individual nozzle. Preferably, the length L and the distance D satisfy the equation D = 0.8 to 1.4L, most preferably D = 0.9 to 1.2L.

The method may be applied to a Fischer-Tropsch synthesis reaction, for example, one in which the reaction temperature is in the range 150 to 300°C, the reaction temperature is in the range 175 to 250°C, and the reaction pressure is in the range 1 to 100 bar. Preferably, the temperature is in the range 200 to 235°C and the pressure is preferably in the range 15 to 25 bar.

The invention also extends to methods of operating the reactors according to the invention to carry out reactions, to the products of those reactions and to further methods comprising various post-processing operations and to the products of such further methods.

Certain terms used in this specification will now be explained in more detail.

A plume of gas is formed at the nozzle mouth by gas flowing through the nozzle mouth and into the slurry phase. The plume may contain isolated volumes of the liquid phase, particularly as liquid drops from the surrounding liquid phase. Within the plume the gas phase is the continuous phase, however. The length L is the length of the jet in the dominant direction of the gas flow through the nozzle mouth.

Dynamic pressure of the gas. This is defined as "The pressure of a fluid resulting from its motion, equal to one half the fluid density times the fluid velocity squared" in Handbook of Chemistry and Physics, i.e. $q=0.5rv^2$, these are exactly the same units as for kinetic energy, which is defined also in Handbook of Chemistry and Physics "The kinetic energy per unit volume of a fluid parcel is thus $0.5rv^2$, where r is the density and v is the speed of the parcel". Based on the definition, kinetic energy will have the units $(kg/m^3){\ast}(m^2/s^2) = kg/m\ s^2$.

The invention may be carried into practice in various ways, and some embodiments will now be described by way of example, in which:

Figure 1 is a top plan view of the gas distributor in the bottom of a reactor vessel;

Figure 2 is a cross-section on the line A-A in Figure 1, simplified for reasons of clarity;

Figure 3 is a section through a simple nozzle; and

Figure 4 is a section through an alternative form of nozzle.

The gas distributor 11 is located in the bottom of a reactor 12. It comprises a main gas feed pipe 13, three gas manifolds 14 and beneath the manifold 14, a series of concentric tubular gas distribution rings 20, 21, 22, 23, 24. The rings 20-24 are connected to the manifolds 14 by means of respective gas supply tubes 30, 31, 32, 33, 34. It will be appreciated that while five rings are shown, there could be fewer or more, depending on various factors, such as the dimensions of the reactor and the rings themselves.

The bottom of the reactor 12 is curved and in order to maintain a substantially constant spacing between the rings 20-24 and the reactor inside surface, the elevation of the rings 20-24 within the reactor increases in a radially outward direction. This is achieved by selecting appropriate lengths for the supply tubes 30-34.

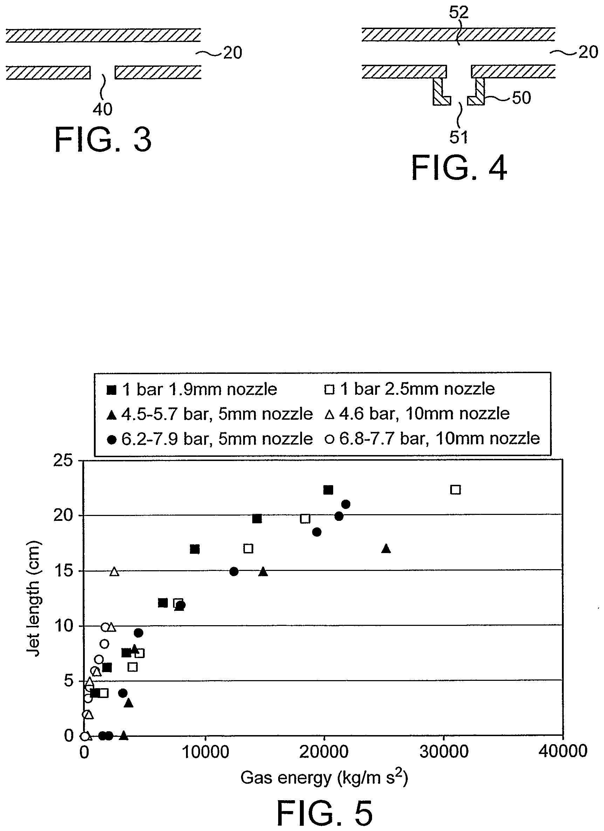

Each of the rings 20-24 is formed with a series of nozzles which are generally equispaced along the ring 20-24, and are also similarly spaced from the nozzles on adjacent rings. The nozzles are shown in more detail in Figures 3 and 4.

Figure 3 shows a nozzle in the form of a simple hole 40 in a ring 20. Figure 4 shows an alternative nozzle in the form of a hole 52 in a ring 20 covered by a cowl 50 which has an aperture 51. In each case, the hole 40 or the aperture 51 faces downwards, and more specifically, downwards and perpendicularly towards the inner surface of the bottom of the reactor 11.

In use, the reactant gas is conveyed to the feed pipe 13 and enters the three manifolds 14, from there it enters the rings 20-24 via the tubes 30-34, and is injected into the slurry in the reactor zone 12 through the nozzles 40 (or 50, 51). In this way, each nozzle produces a downward gas jet into the slurry. These jets flush the surface of the reactor 11 to prevent the catalyst settling and keep the catalyst in motion.

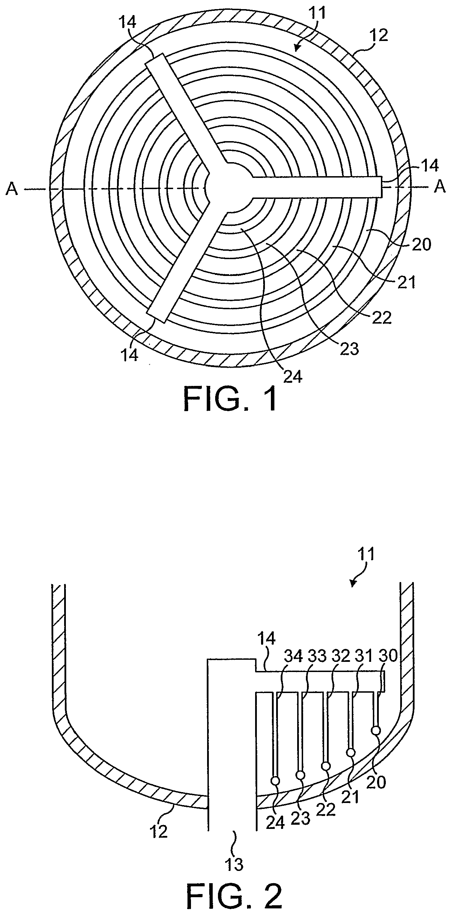

The parameters of a practical embodiment in accordance with Figures 1, 2 and 3 are as follows:

| | |
|---|---|
| Reactor height | 25 m |
| Reactor diameter | 2.7 m |
| Reactor pressure | 19.5 bar |
| Reaction temperature | 225 degrees C |

Feed gas composition

| | |
|---|---|
| $H_2$ | 59 mol% |

(continued)

| $CO_2$ | 28 mol% |
|---|---|
| $CO_2$ | 11 mol% |
| $N_2$ | 2 mol% |

| Gas velocity | 0.18 m/s |
|---|---|
| Catalyst particle conc. | 20 wt.% |
| Gas hold-up | 0.25 |
| Density, slurry | 802 kg/m$^3$ |
| Gas flow (volume) | 1.0 m$^3$/s |
| Total number of orifices | 550 |
| Jet length (i.e. L) | 12.5 cm |
| Mean pressure drop, orifice | 0.19 bar |
| Orifice gas velocity | 45 m/s |
| Orifice diameter | 7.5 mm |

| Mean distance between orifices | 3.75 cm |
|---|---|
| Min. tube diameter | 5.5 cm (I.D.) |
| Min. orifice pressure drop | 0.17 bar |
| Dynamic, pressure | 6900 kg/ms$^2$ |

The invention will be further illustrated in the following Examples.

**Example 1. Gas jet length from gas distributors with downward-pointing nozzles**

A 50 cm diameter coldflow reactor operated at room temperature and atmospheric pressure was filled with water. Air was fed to the reactor through a gas distributor with 20 downward-pointing nozzles. Two different nozzle mouth diameters were tested; 1.9 mm and 2.5 mm. The gas flow varied, and the resulting gas jet length was measured.

Another reactor, with a diameter of 20 cm, also operated at room temperature, but at elevated pressures, was filled with a hydrocarbon liquid. Nitrogen was fed to the reactor through a single downward-pointing nozzle. Nozzles with two different nozzle mouth diameters were tested; 5 mm and 10 mm. The pressure and the gas flow were varied, and the resulting gas jet length was measured. The results are shown in Figure 5 where the measured gas jet lengths are shown as a function of the energy content in the gas, expressed as $0.5\rho v_{or}^2$, where $\rho$ is the density of the gas and $v_{or}$ is the gas velocity through the nozzle mouth. As can be seen from Figure 5, there is a clear relationship between the energy content of the gas and the resulting length of the gas jet, which can be used to estimate the length of the gas jet, and thereby determine the necessary distance between the nozzle outlets and the bottom of the reactor.

**Example 2. Catalyst attrition from gas distributors with downward-pointing nozzles**

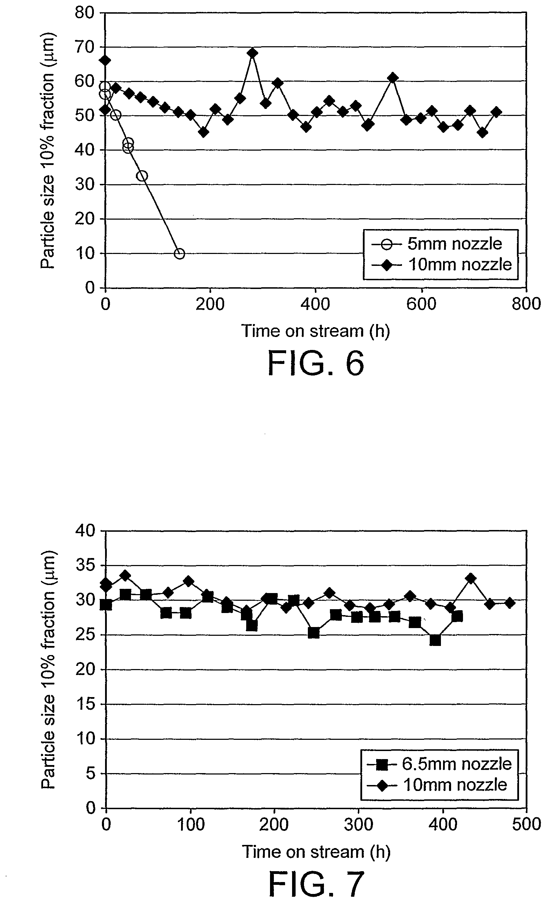

The 20 cm diameter reactor from Example 1 was filled with a hydrocarbon liquid and 30 wt% alumina particles. The reactor pressure was kept at 7.7 bar. Nitrogen was fed to the reactor through a gas distributor with 4 downward-pointing nozzles, each with a diameter of 5 mm, and with a nozzle velocity of approximately 70 m/s. The attrition of the alumina particles was measured by measuring the particle size distribution of the particles. In the Figure 6, the particle size for the 10% fraction of alumina particles is shown as a function of time-on-stream. Figure 6 shows that after approximately 150 hours on stream, 10% of the particles have a particle size of 10 $\mu$m or smaller. Compared with the number of almost 60 $\mu$m at the start of the experiment, this clearly shows that the alumina particles suffer from serious attrition with this gas distributor design.

In another experiment in the same reactor, with the same reactor conditions, a gas distributor with 4 downward-pointing nozzles with a diameter of 10 mm was used, with a nozzle velocity of approximately 17 m/s. Again, the attrition of the alumina particles was measured by measuring the particle size distribution of the particles. The results are shown in Figure 6. As can be seen from Figure 6, the particle size for the 10% fraction remains almost unchanged for almost 750 hours, indicating that catalyst attrition is not a problem with this gas distributor design.

The experiments show that the nozzle velocity should be low in order to avoid attrition.

**Example 3. Design of a gas distributor with downward-pointing nozzles**

A gas distributor is to be designed for a slurry bubble column reactor with a diameter of 2.7 m and a slurry height of 25 m, operated at a pressure of 19.5 bar and a temperature of 225°C, designed for 1763 kmol/h of a synthesis gas consisting of 58.4 $H_2$ %, 27.8 % CO, 11.8 % $CO_2$ and 2% $N_2$. The gas distributor consists of a hemispherically shaped pipe-grid gas distributor with downward-pointing nozzles.

Since each nozzle covers approximately 1 $dm^2$ of the reactor cross sectional area, approximately 600 nozzles are necessary.

The largest axial distance between two nozzles is approximately 25 cm. With a slurry density of 800 $kg/m^3$ and a gas void fraction of 0.25, the hydrostatic pressure different between these nozzles becomes 15 mbar. Since the nozzle pressure drop should be at least 10 times higher, the minimum nozzle pressure drop becomes 0.15 bar.

In Table 1 below, different combinations of nozzle velocities and nozzle diameters are shown, as well as the resulting calculated nozzle pressure drop and estimated gas jet length. As can be seen from Table 1, the calculated pressure drop is larger than the minimum pressure drop for all values of the nozzle velocity in the Table. In order to keep the attrition of the catalyst as low as possible, as low values as possible should be chosen for the nozzle velocity.

**Table 1**

| Nozzle mouth velocity (m/s) | 45 | 50 | 55 | 60 |
|---|---|---|---|---|
| Nozzle mouth diameter (m/m) | 7,0 | 6,7 | 6,3 | 6,1 |
| Pressure drop (bar) | 0,19 | 0,24 | 0,30 | 0,35 |
| Gas jet length (cm) | 12,4 | 14,0 | 15,9 | 17,3 |

**Example 4. Nozzle size and attrition**

The experiments have shown that for a given flow, 5 mm mouth nozzles gave a catalyst attrition that was too high, while 6.5 mm (and 10 mm) nozzles did not. In these experiments, the gas flow was kept constant, so that the nozzle diameter and the nozzle velocity were the only variables. The results are shown in Figure 6 and in Figure 7. The results are presented in two different Figures because two different batches of alumina particles with different physical properties were used.

The attrition resistance of the catalyst is a very important parameter. A catalyst with a high attrition resistance can withstand a higher nozzle velocity (and thereby a higher dynamic pressure) than a catalyst with lower attrition resistance. It should be noted that the catalysts used in the reported experiments had a relatively high attrition resistance.

**Table 2**

| Nozzle diameter (mm) | nozzle velocity (m/s) | dynamic pressure ($kg/ms^2$) |
|---|---|---|
| 5 | 68 | 19050 |
| 6.5 | 41 | 6875 |

In Table 2, the nozzle diameter, nozzle velocity and dynamic pressure in the experiments are shown. The table shows that the catalyst used in the experiments can resist nozzle velocities of 40 m/s and a dynamic pressure of 7000 $kg/m \ s^2$.

Having these numbers in mind when looking at Figure 5, where the relationship between jet length and dynamic pressure (kinetic energy) is shown, it means that a slurry bubble column gas distributor should be designed and operated to give numbers on the left side of Figure 5 in order to avoid catalyst attrition. It further means that the jet length will be in the order of 10-15 cm, and certainly not above 20 cm. (Since other catalysts are most unlikely to have a significantly higher attrition resistance, other catalysts will probably now withstand 5 mm nozzles.)

A certain minimum gas velocity is necessary, in order to give a minimum pressure drop through the nozzles, in order to avoid axial maldistribution of the gas.

**Example 5. Design of large scale bubble column**

It will now be shown how a gas distributor for a large scale bubble column is designed. The design philosophy can be used for any reactor geometries and conditions.

Reactor design parameters:

| | |
|---|---|
| Reactor height | 2 m |
| Reactor diameter | 2.7 m |
| Pressure | 19.5 bar |

| | |
|---|---|
| Temperature | 225°C |
| Gas flow | 1763 kmol/h |
| Gas density | 6.9 kg/m$^3$ |

The main principle in the design of the gas distributor is that all nozzles should have the same distance to the bottom of the reactor. Since the bottom of the reactor not is flat, but has a hemispherical shape, the nozzles will be located at different axial heights. To avoid differences in the axial distribution of gas, the nozzle pressure drop, $DP_{or}$, should be at least an order of magnitude higher than the hydrostatic pressure difference between the nozzles with the largest axial distance. This hydrostatic pressure difference is given by the equation:

$$DP_{or,axial} = \rho_{sl} * g * DL_{axial} * (1-e)$$

where $DP_{or,axial}$ is the hydrostatic pressure difference between the nozzles with the largest axial distance
$\rho_{sl}$ is the slurry density
g is the gravity constant
$DL_{axial}$ is the distance between the nozzles with the largest axial distance
e is the gas hold-up

By using typical numbers for the parameters above, $\rho_{sl}$ = 800 kg/m$^3$ and e = 0.25, and choosing a value for $DL_{axial}$ = 29 cm, $DP_{or,axial}$ becomes 17 mbar, and consequently the minimum nozzle pressure drop, $DP_{or,min}$, becomes 17 mbar* 10 = 0,17 bar.
A number of nozzles, $N_{or}$, equal to 550 is chosen for the reactor with the diameter given above. The gas velocity through each nozzle, $u_{or}$, is defined by the following equation.

$$u_{or} = C_{d,or} * (2 * DP_{or,min} / \rho_g) 0.5$$

where $C_{d,or}$ is the orifice coefficient, set equal to 0.6 when the Reynolds number, Re, is higher than 3000
pg is the gas density

(The equation above is only valid for conditions with incompressible flow, i.e. if $u_{or}$ <0.3*c, where c is the velocity of sound at process conditions. For conditions as given in this example $u_{or,max}$ is estimated to be approximately 185 m/s).
The diameter of each nozzle, $d_{or}$, can be calculated from the equation

$$J = p/4 * d_{or}2 * u_{or} * N_{or}$$

where J is the volumetric gas flow into the slurry reactor
For a given nozzle velocity, the resulting nozzle pressure drop and nozzle diameter can be calculated. In this case a nozzle velocity of 45 m/s was chosen, which resulted in a nozzle diameter of 7.34 mm and a nozzle pressure drop of 0.19 bar.
The calculated nozzles pressure drop is higher than the minimum value of 0.17 bar calculated above, indicating that there will be no axial maldistribution of gas.
The gas flow through each nozzle results in a dynamic pressure of 6920 kg/m s$^2$, which is below the value of 7000 mentioned above, indicating that catalyst attrition will not be a problem.
Based on the relationship between the dynamic pressure and the jet length (Figure 5), the jet length is estimated to be 12.4 cm, which should be the approximate distance between the nozzle outlets and the reactor bottom over the entire reactor cross sectional area.
The nozzles must be distributed over the entire reactor cross sectional area. In this area, the design uses five rings, evenly radially distributed over the reactor cross sectional area, and with axial differences corresponding to the hemispherical shape of the reactor bottom. To avoid radial maldistribution of gas, the nozzle pressure drop, $DP_{or,}$ should be sufficiently large compared to the dynamic pressure in the gas distributor tubes, and the following criterion should be fulfilled:

$$A_{pipe}/SA_{or} > sqrt(10) * C_{d,or}$$

With $C_{d,or}$ equal to 0.6, this implies that the pipe area should be at least twice the sum of nozzle areas in the pipe. The equation above therefore determines a minimum inner tube diameter in the gas distributor tubes.
pg is the gas density

(The equation above is only valid for conditions with incompressible flow, i.e. if $u_{or} < 0.3*c$, where c is the velocity of sound at process conditions. For conditions as given in this example $u_{or,max}$ is estimated to be approximately 185 m/s).

The diameter of each nozzle, $d_{or}$, can be calculated from the equation

$$J = p/4 * d_{or}2 * u_{or} * N_{or}$$

where J is the volumetric gas flow into the slurry reactor

For a given nozzle velocity, the resulting nozzle pressure drop and nozzle diameter can be calculated. In this case a nozzle velocity of 45 m/s was chosen, which resulted in a nozzle diameter of 7.34 mm and a nozzle pressure drop of 0.19 bar.

The calculated nozzles pressure drop is higher than the minimum value of 0.17 bar calculated above, indicating that there will be no axial maldistribution of gas.

The gas flow through each nozzle results in a dynamic pressure of 6920 kg/m $s^2$, which is below the value of 7000 mentioned above, indicating that catalyst attrition will not be a problem.

Based on the relationship between the dynamic pressure and the jet length (Figure 5), the jet length is estimated to be 12.4 cm, which should be the approximate distance between the nozzle outlets and the reactor bottom over the entire reactor cross sectional area.

The nozzles must be distributed over the entire reactor cross sectional area. In this area, the design uses five rings, evenly radially distributed over the reactor cross sectional area, and with axial differences corresponding to the hemispherical shape of the reactor bottom. To avoid radial maldistribution of gas, the nozzle pressure drop, $DP_{or,}$ should be sufficiently large compared to the dynamic pressure in the gas distributor tubes, and the following criterion should be fulfilled:

$$A_{pipe}/SA_{or} > sqrt(10) * C_{d,or}$$

With $C_{d,or}$ equal to 0.6, this implies that the pipe area should be at least twice the sum of nozzle areas in the pipe. The equation above therefore determines a minimum inner tube diameter in the gas distributor tubes.

**Claims**

1. A method of conducting a chemical reaction involving gaseous reactants in a slurry bubble column reactor, said reactor comprising: a slurry zone; a gas space above the slurry zone; gas supply apparatus arranged to supply gas to the slurry zone; a gas outlet from the gas space; and a liquid outlet; the gas supply apparatus comprising gas supply and distribution means and a set of gas nozzles;
   in which said method comprises supplying the gaseous reactants by way of the gas supply apparatus, the reactor contains a volume of slurry comprising a liquid phase and solid catalyst particles, and the catalyst particles are maintained in suspension in the slurry by rising gas bubbles from the gas supply apparatus; and in which the gas supply and distribution means are arranged to deliver the gas to the set of gas nozzles; the nozzles opening downwards and being arranged in use to inject gas into the slurry zone of the reactor, thereby forming downwardly extending gas jets of length L in the slurry; the number and the configuration of the nozzles being selected to provide a distribution of nozzles across a cross section of the reactor which corresponds to a minimum density of 75 evenly distributed nozzles per $m^2$, the opening of each nozzle being positioned a perpendicular distance D from the surface of the bottom of the reactor, wherein D = 0.75 to 1.5 L.

2. A method as claimed in Claim 1, in which the gas flowing through each individual nozzle exerts a dynamic pressure of less than 15 000 kg/m s$^2$.

3. A method as claimed in Claim 1 or Claim 2, in which the hydrostatic pressure difference between the highest and the lowest located nozzles in the reactor is less than 10 times the pressure drop across an individual nozzle.

4. A method as claimed in any preceding Claim, in which the length L and the distance D satisfy the equation D = 0.8 to 1.4L.

5. A method as claimed in Claim 4, in which the reaction is a Fischer-Tropsch synthesis, and in which the reaction temperature is in the range 150 to 300°C and the reaction pressure is in the range 1 to 100 bar.

6. A method as claimed in claim 5, in which the reaction temperature is in the range 175 to 250°C.

7. A method as claimed in Claim 5 or Claim 6, in which the reaction pressure is in the range 10 to 50 bar.

8. A method as claimed in any preceding Claim, in which the gas supply and distribution means comprise a gas supply means and a separate gas distribution means, in which the gas supply means and gas distribution means are tubular.

9. A method as claimed in Claim 8, in which the tubular gas supply means is connected to one or more gas supply inlets and also to a plurality of tubular gas distribution means, along which the nozzles are arranged.

10. A method as claimed in Claim 8 or Claim 9, in which the cross sectional area of the gas distribution means is at least twice the sum of the nozzle areas.

11. A method as claimed in any of Claims 8 to 10, in which the tubular gas supply means comprises two or more tubular structures extending radially from one gas supply inlet located centrally with respect to the general geometry of the reactor, and in which the tubular gas distribution means are mounted generally perpendicular to the respective axes of the tubular structures comprising the gas supply means to which each tubular gas distribution means is connected.

12. A method as claimed in any of Claims 8 to 11, in which the tubular gas distribution means are in the shape of concentric rings or tubular toroids, or sections thereof, or are in the shape of curved tubes, the centre line of each such tube lying in a respective vertical plane.

13. A method as claimed in any of Claims 8 to 12, in which the gas distribution means takes the form of a pipe grid which is part spherical in shape.

14. A method as claimed in any preceding Claim, in which the diameter of the openings of the gas nozzles is equal to or greater than 5 mm.

15. A method as claimed in any preceding Claim, in which the openings of the nozzles are arranged so that the principal axis of the jets of gas produced has an inclination of 45° or less to the vertical.

16. A method as claimed in any preceding Claim, in which the bottom of the reactor has a curved or part-spherical shape and the gas distribution means generally conforms to this shape.

17. A method as claimed in any preceding Claim, in which the bottom of the reactor has a curved or part-spherical shape and the openings of the nozzles lie on a virtual surface which conforms to this shape.

18. A method as claimed in any preceding Claim, in which the openings of at least 95% of the nozzles are equidistant from the bottom of the reactor.

19. A method as claimed in any preceding Claim, in which the openings of the nozzles are configured to direct the jet of gas perpendicularly towards the surface of the bottom of the reactor, when the reactor is in use.

20. A method as claimed in any preceding Claim, in which the nozzles are constituted by orifices formed through the wall of the distribution means.

**Patentansprüche**

1. Verfahren zur Durchführung einer chemischen Reaktion, die gasförmige Ausgangsstoffe umfasst, in einem Suspensionsblasenreaktor, wobei der Reaktor umfasst: eine Suspensionszone; einen Gasraum über der Suspensionszone; eine Gaszufuhrvorrichtung, die so angeordnet ist, dass sie der Suspensionszone Gas zuführt; eine Gasaustrittsöffnung aus dem Gasraum; sowie eine Flüssigkeitsaustrittsöffnung; wobei die Gaszufuhrvorrichtung Gaszufuhr- und Gasverteilungsmittel sowie eine Gruppe von Gasdüsen umfasst;

   wobei das Verfahren ein Zuführen der gasförmigen Ausgangsstoffe mit der Gaszufuhrvorrichtung umfasst, der Reaktor ein Suspensionsvolumen enthält, das eine flüssige Phase und feste Katalysatorpartikel umfasst, und die Katalysatorpartikel in der Suspension durch aufsteigende Gasblasen aus der Gaszufuhrvorrichtung in Suspension gehalten werden; und wobei die Gaszufuhr- und Gasverteilungsmittel so angeordnet sind, dass sie das Gas zu der Gruppe von Gasdüsen befördern; wobei sich die Düsen nach unten öffnen und im Gebrauch so angeordnet sind, dass sie Gas in die Suspensionszone des Reaktors eindüsen, wodurch in der Suspension sich nach unten erstreckende Gasstrahlen mit der Länge L entstehen; wobei die Anzahl und Gestaltung der Düsen so gewählt werden, dass eine Düsenverteilung über einen Querschnitt des Reaktors vorliegt, die einer Mindestdichte von 75 gleichmäßig verteilten Düsen pro m$^2$ entspricht, wobei die Öffnung jeder Düse in einem senkrechten Abstand D zur Bodenfläche des Reaktors platziert ist, wobei D = 0,75 bis 1,5 L.

2. Verfahren nach Anspruch 1, wobei das durch jede einzelne Düse strömende Gas einen dynamischen Druck von unter 15.000 kg/m s$^2$ ausübt.

3. Verfahren nach Anspruch 1 oder Anspruch 2, wobei der hydrostatische Druckunterschied zwischen den am höchsten und den am tiefsten angeordneten Düsen in dem Reaktor geringer ist als das Zehnfache des Druckabfalls über einer einzelnen Düse.

4. Verfahren nach einem der vorhergehenden Ansprüche, wobei die Länge L und der Abstand D die Gleichung D = 0,8 bis 1,4L erfüllen.

5. Verfahren nach Anspruch 4, wobei die Reaktion eine Fischer-Tropsch-Synthese ist, und wobei die Reaktionstemperatur im Bereich von 150 bis 300°C liegt und der Reaktionsdruck im Bereich von 1 bis 100 bar liegt.

6. Verfahren nach Anspruch 5, wobei die Reaktionstemperatur im Bereich von 175 bis 250°C liegt.

7. Verfahren nach Anspruch 5 oder Anspruch 6, wobei der Reaktionsdruck im Bereich von 10 bis 50 bar liegt.

8. Verfahren nach einem der vorhergehenden Ansprüche, wobei die Gaszufuhr- und Gasverteilungsmittel ein Gaszufuhrmittel und ein separates Gasverteilungsmittel umfassen, wobei das Gaszufuhrmittel und das Gasverteilungsmittel röhrenförmig sind.

9. Verfahren nach Anspruch 8, wobei das röhrenförmige Gaszufuhrmittel mit einer oder mehreren Gaszufuhreintrittsöffnungen und auch mit einer Vielzahl von röhrenförmigen Gasverteilungsmitteln verbunden ist, an denen entlang die Düsen angeordnet sind.

10. Verfahren nach Anspruch 8 oder Anspruch 9, wobei die Querschnittsfläche des Gasverteilungsmittels mindestens das Doppelte der Summe der Düsenflächen beträgt.

11. Verfahren nach einem der Ansprüche 8 bis 10, wobei das röhrenförmige Gaszufuhrmittel zwei oder mehr röhrenförmige Strukturen umfasst, die von einer Gaszufuhreintrittsöffnung aus radial verlaufen, die sich bezogen auf die allgemeine Geometrie des Reaktors mittig befindet, und wobei die röhrenförmigen Gasverteilungsmittel im Allgemeinen senkrecht bezogen auf die jeweiligen Achsen der röhrenförmigen Strukturen montiert sind, aus denen das Gaszufuhrmittel besteht, mit dem jedes röhrenförmige Gasverteilungsmittel verbunden ist.

12. Verfahren nach einem der Ansprüche 8 bis 11, wobei die röhrenförmigen Gasverteilungsmittel die Form konzentrischer Ringe oder röhrenförmiger Toroide oder von Abschnitten davon aufweisen oder die Form gebogener Röhren aufweisen, wobei die Mittellinie einer jeden solchen Röhre in einer jeweiligen vertikalen Ebene liegt.

13. Verfahren nach einem der Ansprüche 8 bis 12, wobei das Gasverteilungsmittel die Form eines Rohrgitters annimmt, das teilkugelförmig geformt ist.

**14.** Verfahren nach einem der vorhergehenden Ansprüche, wobei der Durchmesser der Öffnungen der Gasdüsen größer gleich 5 mm ist.

**15.** Verfahren nach einem der vorhergehenden Ansprüche, wobei die Öffnungen der Düsen so angeordnet sind, dass die Hauptachse der erzeugten Gasstrahlen eine Neigung von maximal 45° zur Senkrechten aufweist.

**16.** Verfahren nach einem der vorhergehenden Ansprüche, wobei der Reaktorboden eine gekrümmte oder teilkugelförmige Form aufweist und die Form des Gasverteilungsmittels ganz allgemein dieser Form entspricht.

**17.** Verfahren nach einem der vorhergehenden Ansprüche, wobei der Reaktorboden eine gekrümmte oder teilkugelförmige Form aufweist und die Öffnungen der Düsen auf einer virtuellen Fläche liegen, die dieser Form entspricht.

**18.** Verfahren nach einem der vorhergehenden Ansprüche, wobei die Öffnungen von mindestens 95% der Düsen den gleichen Abstand zum Reaktorboden aufweisen.

**19.** Verfahren nach einem der vorhergehenden Ansprüche, wobei die Öffnungen der Düsen so eingerichtet sind, dass sie den Gasstrahl senkrecht in Richtung der Bodenfläche des Reaktors leiten, wenn der Reaktor im Einsatz ist.

**20.** Verfahren nach einem der vorhergehenden Ansprüche, wobei die Düsen von Durchflussöffnungen gebildet werden, die durch die Wand der Verteilungsmittel hindurch ausgebildet sind.


**Revendications**

**1.** Procédé de conduite d'une réaction chimique faisant entrer en jeu des réactifs gazeux dans un réacteur à colonne à bulles pour suspension, ledit réacteur comprenant : une zone de suspension ; un espace de gaz au-dessus de la zone de suspension ; un appareil d'alimentation en gaz agencé pour amener un gaz à la zone de suspension ; une sortie de gaz à partir de l'espace de gaz ; et une sortie de liquide ; l'appareil d'alimentation en gaz comprenant des moyens d'alimentation en gaz et de distribution de gaz et un ensemble de buses à gaz ;
dans lequel ledit procédé comprend l'apport des réactifs gazeux au moyen de l'appareil d'alimentation en gaz, le réacteur contient un volume de suspension comprenant une phase liquide et des particules de catalyseur solide, et les particules de catalyseur sont maintenues en suspension dans la suspension par des bulles de gaz qui s'élèvent à partir de l'appareil d'alimentation en gaz ; et dans lequel les moyens d'alimentation en gaz et de distribution de gaz sont agencés pour amener le gaz à l'ensemble de buses à gaz ; les buses s'ouvrant vers le bas et étant agencées pour, en cours d'utilisation, injecter du gaz dans la zone de suspension du réacteur, en formant ainsi des jets de gaz dirigés vers le bas et ayant une longueur L dans la suspension ; le nombre et la configuration des buses étant sélectionnés pour produire une répartition des buses à travers une section transversale du réacteur qui correspond à une densité minimum de 75 buses réparties uniformément par m$^2$, l'ouverture de chaque buse étant positionnée à une distance perpendiculaire D de la surface du fond du réacteur, avec D = 0,75 à 1,5 L.

**2.** Procédé selon la revendication 1, dans lequel le gaz qui s'écoule à travers chaque buse individuelle exerce une pression dynamique inférieure à 15 000 kg/m s$^2$.

**3.** Procédé selon la revendication 1 ou la revendication 2, dans lequel la différence de pression hydrostatique entre les buses les plus hautes et les buses les plus basses dans le réacteur est inférieure à 10 fois la chute de pression à travers une buse individuelle.

**4.** Procédé selon l'une quelconque des revendications précédentes, dans lequel la longueur L et la distance D satisfont l'équation D = 0,8 à 1,4 L.

**5.** Procédé selon la revendication 4, dans lequel la réaction est une synthèse de Fischer-Tropsch, et dans lequel la température de réaction est de 150 à 300 °C et la pression de réaction est de 1 à 100 bars.

**6.** Procédé selon la revendication 5, dans lequel la température de réaction est de 175 à 250 °C.

**7.** Procédé selon la revendication 5 ou la revendication 6, dans lequel la pression de réaction est de 10 à 50 bars.

**8.** Procédé selon l'une quelconque des revendications précédentes, dans lequel les moyens d'alimentation en gaz et de distribution de gaz comprennent un moyen d'alimentation en gaz et un moyen de distribution de gaz distincts, dans lequel le moyen d'alimentation en gaz et le moyen de distribution de gaz sont tubulaires.

9. Procédé selon la revendication 8, dans lequel le moyen d'alimentation en gaz tubulaire est relié à une ou plusieurs entrées d'alimentation en gaz et aussi à une pluralité de moyens de distribution de gaz tubulaires, le long desquels sont disposées les buses.

10. Procédé selon la revendication 8 ou la revendication 9, dans lequel la surface de section transversale du moyen de distribution de gaz est d'au moins deux fois la somme des surfaces des buses.

11. Procédé selon l'une quelconque des revendications 8 à 10, dans lequel le moyen d'alimentation en gaz tubulaire comprend deux structures tubulaires ou plus s'étendant radialement à partir d'une seule entrée d'alimentation en gaz positionnée au centre de la géométrie générale du réacteur, et dans lequel les moyens de distribution de gaz tubulaires sont montés de façon généralement perpendiculaire aux axes respectifs des structures tubulaires constituant le moyen d'alimentation en gaz auquel chaque moyen de distribution de gaz tubulaire est relié.

12. Procédé selon l'une quelconque des revendications 8 à 11, dans lequel les moyens de distribution de gaz tubulaires sont sous forme d'anneaux concentriques ou de toroïdes tubulaires, ou de sections de ceux-ci, ou sont sous forme de tubes courbes, la ligne centrale de chacun de ces tubes se trouvant dans un plan vertical respectif.

13. Procédé selon l'une quelconque des revendications 8 à 12, dans lequel le moyen de distribution de gaz prend la forme d'un réseau de tuyaux qui est en partie de forme sphérique.

14. Procédé selon l'une quelconque des revendications précédentes, dans lequel le diamètre des ouvertures des buses à gaz est égal ou supérieur à 5 mm.

15. Procédé selon l'une quelconque des revendications précédentes, dans lequel les ouvertures des buses sont agencées de telle sorte que l'axe principal des jets de gaz produits ait une inclinaison de 45 degrés ou moins par rapport à la verticale.

16. Procédé selon l'une quelconque des revendications précédentes, dans lequel le fond du réacteur est de forme courbe ou partiellement sphérique et le moyen de distribution de gaz épouse généralement cette forme.

17. Procédé selon l'une quelconque des revendications précédentes, dans lequel le fond du réacteur est de forme courbe ou partiellement sphérique et les ouvertures des buses se trouvent sur une surface virtuelle qui épouse cette forme.

18. Procédé selon l'une quelconque des revendications précédentes, dans lequel les ouvertures d'au moins 95 % des buses sont équidistantes du fond du réacteur.

19. Procédé selon l'une quelconque des revendications précédentes, dans lequel les ouvertures des buses sont configurées pour diriger le jet de gaz perpendiculairement vers la surface du fond du réacteur, lorsque le réacteur est en cours d'utilisation.

20. Procédé selon l'une quelconque des revendications précédentes, dans lequel les buses sont constituées d'orifices formés à travers la paroi des moyens de distribution.

FIG. 1

FIG. 2

FIG. 3

FIG. 4

FIG. 5

FIG. 6

FIG. 7

**EP 1 735 086 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20010018462 A
- US 2853369 A
- US 5620670 A
- US 4443551 A
- US 6278034 B
- GB 787123 A